(19) Europäisches Patentamt / European Patent Office / Office européen des brevets

(11) **EP 3 830 058 B1**

(12) **FASCICULE DE BREVET EUROPEEN**

(45) Date de publication et mention de la délivrance du brevet:
**04.05.2022 Bulletin 2022/18**

(21) Numéro de dépôt: **19742400.5**

(22) Date de dépôt: **26.07.2019**

(51) Classification Internationale des Brevets (IPC):
**C04B 41/80** (2006.01)     **C03B 5/43** (2006.01)

(52) Classification Coopérative des Brevets (CPC):
(C-Sets disponibles)
**C04B 41/80; C03B 5/43; C04B 41/0036; C04B 41/009**     (Cont.)

(86) Numéro de dépôt international:
**PCT/EP2019/070243**

(87) Numéro de publication internationale:
**WO 2020/025497 (06.02.2020 Gazette 2020/06)**

(54) **PROCEDE DE MARQUAGE D'UNE PIECE CERAMIQUE REFRACTAIRE**

VERFAHREN ZUR MARKIERUNG EINES FEUERFESTEN KERAMISCHEN TEILS

METHOD FOR MARKING A REFRACTORY CERAMIC PART

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2018 FR 1857213**

(43) Date de publication de la demande:
**09.06.2021 Bulletin 2021/23**

(73) Titulaire: **SAINT-GOBAIN CENTRE DE RECHERCHES ET D'ETUDES EUROPEEN**
**92400 Courbevoie (FR)**

(72) Inventeur: **BORIES, Olivier**
**77300 FONTAINEBLEAU (FR)**

(74) Mandataire: **Nony**
**11 rue Saint-Georges**
**75009 Paris (FR)**

(56) Documents cités:
**US-A- 4 769 310**

EP 3 830 058 B1

(52) Classification Coopérative des Brevets (CPC):
(Cont.)

C-Sets
**C04B 41/009**

**Description**

**Domaine technique**

L'invention se rapporte à un procédé de marquage d'une pièce céramique réfractaire, notamment destinée à un four de verrerie ou à un four métallurgique.

**Etat de la technique**

Les pièces céramiques réfractaires denses, généralement de grandes dimensions, peuvent être utilisées à des températures élevées, en particulier dans des fours de fusion du verre ou de métaux.

Elles peuvent notamment être produites par électrofusion. Ce procédé consiste à fondre les matières premières dans un four à arc, puis à couler la matière en fusion dans un moule et à la refroidir pour la solidifier. Le bloc dit « fondu » obtenu peut être ensuite usiné pour lui donner des dimensions adaptées à l'application.

La composition d'une pièce céramique réfractaire et son procédé de fabrication sont adaptés à la région de four à laquelle elle est destinée.

Pour assurer la traçabilité d'une pièce et pouvoir l'identifier lors de l'assemblage du four, notamment pour qu'elle puisse être disposée à un emplacement prédéterminé, il est nécessaire de la marquer sur le site de fabrication.

La marque doit être

- contrastée,
- résistante à l'abrasion lors de sa manipulation, notamment lors de l'opération de montage,
- résistante à des températures supérieures à 600°C, en particulier pour autoriser un marquage d'une face de joint ou d'une face froide de la pièce.

Selon les applications, la marque doit être effaçable ou non.

Sur la face froide, une marque non effaçable permet d'authentifier et de tracer la pièce après montage, et même après utilisation du four.

Sur les autres faces, une marque effaçable permet une modification de la marque lors du montage et évite une détérioration trop rapide, notamment vis-à-vis du bullage dans une application en four verrier.

Le procédé de marquage doit être rapide et efficace, avec une vitesse de marquage de plusieurs centimètres par seconde. De préférence, le marquage d'une surface de 400 cm$^2$ doit pouvoir être réalisé en une minute.

Le procédé de marquage ne doit de préférence pas nécessiter de préparation de la surface, hormis un simple essuyage, un séchage à l'air ambiant après usinage sous eau, ou un sablage afin de réduire les bavures ou excroissances observées sur des pièces brutes de fabrication ou d'usinage.

Enfin, le marquage ne devrait pas conduire à un changement de formulation du matériau, toujours susceptible de réduire la performance en service.

Pour marquer une pièce, il est connu de déposer une encre à sa surface. Les encres ne sont cependant pas persistantes à la température d'usage des fours et sont nuisibles à l'environnement.

Des procédés de marquage laser sont également connus. Appliqués à des pièces céramiques comportant des grains comprenant de la zircone, ils conduisent classiquement à des dégradés de couleur et/ou à des taches noires qui nuisent à la lisibilité de la marque.

US 5 272 120 divulgue par exemple un procédé de marquage au moyen d'un rayonnement laser YAG ou $CO_2$, d'une puissance typiquement de 7 à 10 W environ, avec une fréquence de 8 KHz et une vitesse de déplacement de 22 mm/sec sous atmosphère réduite en oxygène.

US 5 543 269 propose un procédé de marquage au moyen d'un rayonnement laser de type Nd-YAG multimode. La marque est effaçable.

JP 2005-4175624 suggère un procédé de marquage au moyen d'un rayonnement laser oscillant en mode simple (à la différence des lasers YAG), notamment au moyen d'un laser YVO$_4$ de 6,5 W de puissance et de 1064 nanomètres de longueur d'onde.

US 4 769 310 suggère de modifier la composition de pièces céramiques à marquer en y incorporant des pigments inorganiques sensibles au rayonnement laser. Ces ajouts peuvent cependant dégrader significativement la performance de la pièce céramique en service et contaminer le bain de verre en fusion dans le cas d'une application à un four verrier.

US 5 030 551 ou US 6 238 847 proposent de déposer sur la surface à marquer une couche sensible au rayonnement laser. Cette couche est cependant peu adhérente et résiste mal à l'abrasion.

Il existe donc un besoin pour un procédé de marquage d'une pièce céramique réfractaire dense respectant les contraintes listées ci-dessus et ne présentant pas les inconvénients des procédés connus.

Un but de l'invention est de répondre, au moins partiellement, à ce besoin.

Résumé de l'invention

L'invention concerne un procédé de marquage d'une surface d'une pièce céramique réfractaire, dite « surface à marquer », ladite pièce, dite « pièce céramique réfractaire dense », présentant

- une microstructure comprenant, voire constituée de grains comportant plus de 50% en masse de $ZrO_2$, de préférence des grains de $ZrO_2$, liés par une phase liante silicatée, et
- une porosité totale inférieure à 5% en volume,

ledit procédé comportant une irradiation de ladite surface par un faisceau laser, le faisceau étant émis par un dispositif laser réglé pour respecter la relation (1) suivante :

$$a.V^2 + b.F^2 + c.VF + d.V + e. F + f < 0,$$

dans laquelle : $a = 10^4. D + 2.10^6$

$b = 0,5.10^6. D - 150.10^6$
$c = 0,5.10^6. D - 300.10^6$
$d = 5.10^3. D - 2,5.10^6$
$e = -5.10^3. D + 2,0.10^6$
$f = -5.10^9. D + 1,8.10^{12}$

V étant exprimé en mm/seconde, D étant exprimé en mm et F étant exprimé en KHz.
Les inventeurs ont constaté qu'un tel procédé permet avantageusement de réaliser un marquage répondant au besoin formulé précédemment.
En particulier, ils ont constaté que la marque présente un très bon contraste et une couleur uniforme, aucun dégradé ou de tâche noire n'étant perceptible à l'œil nu, même au pourtour des caractères ou des zones marquées.
Sans être liés par la théorie, les inventeurs expliquent ce résultat par les spécificités du faisceau laser, qui élimine une partie de la phase liante et une portion des grains, mais sans déchausser lesdits grains.
De préférence, l'énergie d'exposition est adaptée pour éliminer la phase liante sur une profondeur supérieure à 10% et/ou inférieure à 50%, de préférence inférieure à 30%, voire inférieure à 20% de la taille moyenne des grains de la surface à marquer.
De préférence, un procédé selon l'invention présente encore une ou plusieurs des caractéristiques optionnelles suivantes :

- la fréquence F est inférieure à 300 KHz et/ou la vitesse V est inférieure à 5000 mm/sec ;
- la fréquence F est inférieure à 100 KHz et/ou la vitesse V est inférieure à 3000 mm/sec ;
- pour fabriquer une marque effaçable, on règle le dispositif laser de manière que 800.F/(V.D) < 1 ;
- pour améliorer la lisibilité, on règle le dispositif laser de manière que 800.F/(V.D) > 0,1, de préférence 800.F/(V.D) > 0,15 ;
- l'énergie d'exposition est adaptée pour éliminer la phase liante sur une profondeur comprise entre 5 et 100 $\mu$m, de préférence inférieure à 75 $\mu$m, de préférence inférieure à 50 $\mu$m ;
- avant irradiation, la surface à marquer présente une rugosité Ra, mesurée selon la norme ISO4287/1997, inférieure à 20 $\mu$m et/ou la pièce céramique réfractaire présente un pourcentage d'humidité inférieur ou égal à 1% ;
- les grains comportent plus de 95% en masse de $ZrO_2$ ;
- la pièce céramique réfractaire est en un matériau fondu ;
- la pièce céramique réfractaire est en un matériau constitué, pour plus de 90% de sa masse, d'un ou plusieurs oxydes choisis dans le groupe constitué par $ZrO_2$, $Al_2O_3$, $SiO_2$, $Cr_2O_3$, $Y_2O_3$, et $CeO_2$ ;
- le faisceau laser présente, sur la surface à marquer, un diamètre équivalent compris entre 30 et 100 $\mu$m ;
- l'énergie d'exposition est comprise entre 5 et 3 000 J/mm$^3$.

L'invention concerne aussi une pièce céramique réfractaire dense comportant une marque, de préférence inscrite au moyen d'un procédé de marquage selon l'invention, la marque définissant une cavité

- d'une profondeur comprise entre 5 et 100 $\mu$m, de préférence inférieure à 75 $\mu$m, de préférence inférieure à 50 $\mu$m,

et/ou

- du fond de laquelle les grains font saillie, en moyenne, de plus de 5%, de préférence de plus de 10% de leur taille moyenne, et/ou de moins de 50%, de préférence moins de 30%, voire moins de 20% de leur taille moyenne.

La marque peut être notamment un caractère alphanumérique, une ligne ou une matrice de points ou une représentation graphique.

De préférence, la marque comporte une pluralité de points, la densité de points étant comprise entre 100 et 1000 points par $mm^2$.

L'invention concerne également un procédé de fabrication d'un four, en particulier d'un four de verrerie ou d'un four métallurgique, ledit procédé comportant les étapes suivantes :

1) fabrication d'une pluralité de pièces céramiques réfractaires et inscription d'une marque sur chaque pièce suivant un procédé de marquage selon l'invention, la marque inscrite sur une pièce étant fonction d'un emplacement prévu pour ladite pièce dans le four ;

2) assemblage des pièces céramiques réfractaires, de manière que chaque pièce soit à un emplacement conforme à la marque qui y est inscrite.

**Définitions**

- Par « pièce céramique réfractaire », on entend une pièce en un matériau inorganique non métallique.
- La « face chaude » est une face exposée à l'intérieur du four, c'est-à-dire en contact avec la matière en fusion, par exemple du verre ou un métal, et/ou avec l'environnement gazeux de cette matière. La face froide est classiquement la face opposée à la face chaude. Les faces chaude et froide d'un bloc sont reliées entre elles

  - par des faces latérales, ou « faces de joint », en regard de faces latérales de blocs adjacents de la même rangée de blocs, et
  - par des faces supérieure et inférieure, en regard de faces inférieure et supérieure d'au moins un bloc supérieur reposant sur ledit bloc et d'au moins un bloc inférieur sur lequel ledit bloc repose, respectivement.

- L'épaisseur d'un bloc est classiquement sa plus petite dimension. Elle mesure classiquement la distance entre la face chaude, en contact avec l'atmosphère du four, et la face froide opposée.
- Le diamètre équivalent de la section d'un faisceau est le diamètre d'un disque présentant la même aire que cette section.
- On appelle « grain » un élément cristallisé, présentant une composition homogène ou une composition eutectique, et présentant une taille supérieure à 10 $\mu$m.
- On appelle « cristallite » un élément cristallisé présentant une surface supérieure à 0,1 $\mu$m$^2$ et inférieure à 10 $\mu$m$^2$, les surfaces étant mesurées sur une image prise en microscopie optique sur une coupe du produit.
- Par « taille de grain », on entend la demi-somme de la longueur hors tout et de la largeur hors tout d'un grain, la longueur et la largeur étant mesurées sur une image prise en microscopie optique sur une coupe du produit, la largeur étant mesurée dans une direction perpendiculaire à ladite longueur.
- Par « moyenne », on entend une moyenne arithmétique.
- Par « grains de $ZrO_2$ », on entend un grain comportant plus de 80%, de préférence plus de 90%, de préférence plus de 95%, de préférence plus de 98% de $ZrO_2$, en pourcentage en masse sur la base des oxydes.
- Sauf indication contraire, tous les pourcentages relatifs aux compositions sont des pourcentages en masse sur la base des oxydes.
- La porosité totale est classiquement donnée par la relation suivante :

Porosité totale = 100 x (densité absolue – densité apparente) / densité absolue.

Les mesures de la densité apparente sont effectuées suivant la norme ISO5017 sur un barreau prélevé à cœur de la pièce, en zone saine. La densité absolue est mesurée sur poudre broyée, au moyen d'un pycnomètre à hélium.

- « Comporter », « présenter » ou « comprendre » doivent être interprétés de manière large, non limitative.

**Brève description des figures**

D'autres caractéristiques et avantages de l'invention apparaitront encore à la lecture de la description détaillée qui va suivre et à l'examen du dessin annexé, dans lequel :

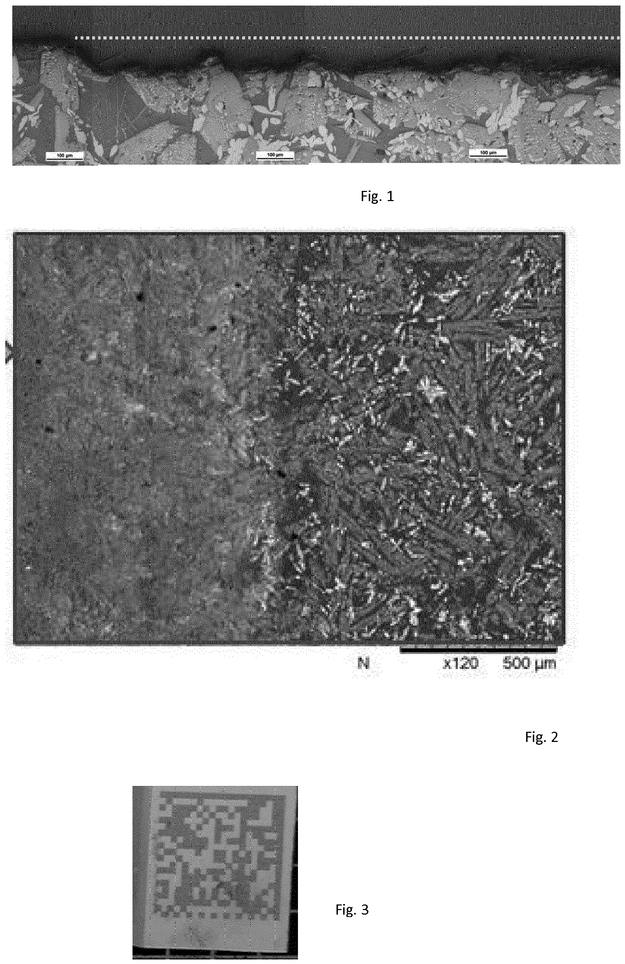

- la figure 1 montre la section, selon un plan de coupe perpendiculaire à la surface marquée, d'une pièce selon l'invention, marquée par irradiation laser ;
- la figure 2 montre la transition entre la surface marquée d'une pièce céramique réfractaire obtenue suivant un procédé selon l'invention et la surface non marquée, la zone marquée sur la moitié gauche de la photo étant d'aspect vitreux et la zone non irradiée par le laser sur la moitié droite de la photo faisant apparaitre la texture du produit de base ;
- la figure 3 montre un exemple de « datamatrix » inscrite sur une pièce réfractaire suivant un procédé selon l'invention, cette marque carrée d'environ 30 mm par 30 mm, étant constituée par un ensemble de carrés de 1 mm de côté environ.

**Description détaillée**

La pièce céramique réfractaire à marquer comprend ou est de préférence constituée en un matériau fritté ou, de préférence, fondu. Sa porosité totale est de préférence inférieure à 5%, de préférence inférieure à 3%, de préférence inférieure à 1%.

La pièce céramique réfractaire à marquer est de préférence obtenue par fusion d'une charge composée de particules réfractaires, coulage dans un moule du bain de liquide ainsi obtenu, puis refroidissement pour solidifier la masse liquide dans le moule. De préférence la pièce céramique réfractaire à marquer est obtenue par électrofusion, de préférence au moyen d'un four à arc.

De préférence, la pièce céramique réfractaire présente une épaisseur maximale supérieure à 50 mm, ou à 75 mm, et/ou de préférence inférieure à 300 millimètres, inférieure à 200 millimètres, voire inférieure à 100 millimètres.

La pièce céramique réfractaire à marquer peut être en particulier choisie dans le groupe constitué par les blocs de cuve, les briques à nez, les arches de brûleurs ou d'autres pièces de la superstructure d'un four verrier, de préférence les blocs de cuve.

La surface à marquer peut être sur une face quelconque de la pièce céramique réfractaire. De préférence, elle est sur la face chaude ou sur une face latérale, ou une face froide.

La pièce céramique comporte classiquement une phase liante intergranulaire reliant des grains cristallisés.

Les grains cristallisés comportent, de préférence pour plus de 80%, plus de 90%, plus de 95%, voire sensiblement 100% en volume, des grains de $ZrO_2$ et, optionnellement, des eutectiques corindon-zircone.

De préférence, plus de 80%, plus de 90%, plus de 95%, voire sensiblement 100% des grains, en pourcentages massiques, sont des grains de $ZrO_2$.

La zircone dans la pièce céramique réfractaire est présente sous forme de grains. Ces grains, monocristallins ou polycristallins, comprennent l'élément Zr, et sont de préférence constitués de $ZrO_2$ pour plus de 95%, plus de 98%, plus de 99%, ou sensiblement 100% de leur masse.

La taille moyenne des grains, en particulier à la surface à marquer, est de préférence supérieure à 10 $\mu$m, de préférence supérieure à 20 $\mu$m, de préférence supérieure ou égale à 30 $\mu$m et/ou inférieure à 200 $\mu$m, de préférence inférieure à 100 $\mu$m.

La pièce céramique réfractaire est de préférence constituée, pour plus de 90% de sa masse, d'un ou plusieurs oxydes choisis dans le groupe constitué par $ZrO_2$, $Al_2O_3$, $SiO_2$, $Cr_2O_3$, $Y_2O_3$, et $CeO_2$. De préférence $ZrO_2$, $Al_2O_3$ et $SiO_2$ représentent ensemble plus de 90% de la masse de la pièce céramique réfractaire.

La pièce céramique réfractaire comporte de préférence plus de 15% de $ZrO_2$, de manière plus préférée comporte entre 26% et 95% de $ZrO_2$.

Dans différents modes de réalisation préférés, la composition du produit de base est telle que, pour un total de plus de 90%, plus de 95%, voire plus de 98% :

- $ZrO_2$ : 26 à 45% ;
- $Al_2O_3$ : 40 à 60% ;
- $SiO_2$: 5 à 35% ;

ou telle que

- $ZrO_2$ : 50 à moins de 80 % ;
- $Al_2O_3$ : 15 à 30% ;
- $SiO_2$: 5 à 15%.

ou telle que

- ZrO$_2$ : 80 à 98% ;
- Al$_2$O$_3$ : 5 à 20% ;
- SiO$_2$: 1 à 12%.

ou telle que

- 10% < ZrO$_2$ $\leq$ 25% ;
- 50% < Al$_2$O$_3$ < 75% ;
- 5% < SiO$_2$ <35%.

De préférence, en particulier pour tous ces modes de réalisation, la teneur massique de Na$_2$O et B$_2$O$_3$ est inférieure à 2 %, en pourcentage massique sur la base des oxydes du produit de base.

La phase liante comporte, de préférence est constituée d'une ou plusieurs phases vitreuses ou vitrocéramiques. Elle représente de préférence entre 5% et 50%, de préférence entre 10% et 40% en masse de la pièce céramique réfractaire.

De préférence, la phase liante est une phase silicatée dont la proportion massique de Na$_2$O est de préférence inférieure à 20%, de préférence inférieure 10% et/ou la proportion massique d'Al$_2$O$_3$ est inférieure à 30%.

Pour marquer la surface de la pièce céramique réfractaire, on concentre une quantité déterminée d'énergie sur une petite surface, pendant un temps déterminé.

*Préparation*

Avant de procéder à la projection du faisceau laser, la pièce céramique réfractaire à marquer est préparée.

De préférence, la pièce céramique réfractaire à marquer est rectifiée pour que la surface à marquer soit plane. De préférence, la planéité de cette surface, ou « flèche », mesurée à l'aide d'un palpeur micrométrique, de préférence sur une longueur représentative d'au moins 10 cm est inférieure à 100 $\mu$m, de préférence inférieure à 50 $\mu$m.

La rugosité de la surface à marquer est de préférence telle que la rugosité Ra, mesurée selon la norme ISO4287/1997, est inférieure à 20 $\mu$m, de préférence inférieure à 15 $\mu$m, de préférence encore inférieure à 10 $\mu$m sur une longueur de référence de 100 microns. Ainsi, par exemple sur des matériaux de type AZS, la variation de z (vallées et pics) mesurée au palpeur sur un profil de 150 microns est de +30/-30 micromètres, de préférence +20/-20 micromètres .

De préférence, la pièce à marquer est séchée de sorte que son pourcentage d'humidité soit inférieur ou égal à 1%, de préférence inférieur à 0,5%.

*Irradiation*

Le dispositif émettant le faisceau laser peut être un dispositif laser conventionnel, de préférence du type « CO$_2$ », de préférence de longueur d'onde 1065 +/-5 nanomètres, de préférence de puissance moyenne de faisceau laser (ou « puissance moyenne en sortie ») comprise entre 10 W et 100 Watt, de préférence entre 20 W et 60 W.

Ce dispositif peut comprendre un dispositif de visée aidant au positionnement du faisceau laser et/ou une interface graphique permettant d'importer une image, par exemple en format JPG, représentant un symbole ou une marque commerciale ou un code en deux dimensions à reproduire sur la pièce céramique réfractaire.

Le dispositif est réglé de manière à irradier la surface à marquer au moyen d'un faisceau incident, laser afin de transmettre à cette surface une énergie d'exposition de préférence supérieure à 5 J/mm$^3$, de préférence supérieure à 7 J/mm$^3$, de préférence supérieure à 10 J/mm$^3$, de préférence supérieure à 20 J/mm$^3$, voire supérieure à 30 J/mm$^3$ et/ou inférieure à 2 000 J/mm$^3$, de préférence inférieure à 1 500 J/mm$^3$, de préférence inférieure à 1 000 J/mm$^3$, de préférence inférieure à 500 J/mm$^3$.

L'énergie d'exposition est le rapport entre la puissance surfacique du faisceau et la vitesse de déplacement du faisceau incident sur la surface à marquer.

La puissance surfacique est le rapport de la puissance, en Watt, du faisceau incident divisée par la surface, en mm$^2$, de la section du faisceau incident lorsqu'il rencontre la surface à marquer.

La section du faisceau incident peut être de forme variée, par exemple de section circulaire.

Le diamètre équivalent de la section du faisceau incident lorsqu'il rencontre la surface à marquer ou « largeur de rayonnement» est de préférence supérieur à 10 $\mu$m, de préférence supérieur à 30 $\mu$m, de préférence supérieur à 35 $\mu$m, et/ou inférieur à 100 $\mu$m, de préférence inférieur à 55 $\mu$m. Un tel diamètre équivalent est particulièrement bien adapté pour le marquage d'une pièce céramique réfractaire présentant des grains céramiques liés par une phase vitreuse ou vitrocéramique.

De préférence, la largeur du faisceau est adaptée en fonction de la taille moyenne des grains de $ZrO_2$ présents à la surface du produit de base. De préférence, plus la taille moyenne des grains est grande, plus la largeur du faisceau est grande. De préférence, la largeur du faisceau est comprise entre 0,5 et 2 fois la taille moyenne des grains de $ZrO_2$.

La puissance surfacique du faisceau incident est supérieure à 1 000 $W/mm^2$, de préférence supérieure à 5 000 $W/mm^2$, de préférence supérieure à 7 000 $W/mm^2$, de préférence supérieure à 10 000 $W/mm^2$, et/ou de préférence inférieure à 100 000 $W/mm^2$, de préférence inférieure à 50 000 $W/mm^2$ , de préférence inférieure à 30 000 $W/mm^2$

L'énergie apportée à la surface à marquer doit être apportée de manière à limiter la profondeur sur laquelle la phase liante est éliminée.

Le dispositif utilisé est un laser pulsé, la fréquence des pulsations « F » étant de préférence supérieure à 10 KHz, de préférence supérieure à 20 KHz, et/ou inférieure à 300 KHz, de préférence inférieure à 200 KHz, de préférence inférieure à 100 KHz.

La combinaison de la pulsation et du déplacement du faisceau permet avantageusement de créer une marque constituée d'une multitude de points, chaque point résultant de l'action d'un pulse sur la surface à marquer.

De préférence, la densité de points est comprise entre 100 et 1000 points /$mm^2$.

Une marque est une indication visuelle qui a une signification pour un homme ou une machine, par exemple un caractère alphanumérique, ou un code à deux dimensions, par exemple une matrice de points (par exemple une « data matrix » ou un QR code) ou une représentation graphique, par exemple un symbole ou un dessin. De préférence, la marque est un code lisible par un lecteur type datamatrix Datalogic matrix 210 fourni par la société Trumpf ou par une caméra in-sight 7210 fournie par la société 7tech, pourvue d'un capteur de résolution 600*800 pixels.

De préférence, la marque est constituée par un ou plusieurs groupes de dits points. De préférence, une marque, notamment lorsqu'elle représente un caractère alphanumérique ou un code, présente une plus grande dimension comprise entre 1 et 5 cm.

La surface de l'ensemble des marques sur la pièce céramique réfractaire, ou « champ de marquage », par exemple la surface sur laquelle s'étendent une pluralité de caractères alphanumériques, est de préférence supérieure à 100 $cm^2$ et/ou inférieure à 1000 $cm^2$, de préférence inférieure ou égale à 200 $cm^2$. Le champ de marquage peut être par exemple un carré de 30 cm de côté.

Le champ de marquage peut comprendre un ensemble de caractères alphanumériques, par exemple une succession de 5 à 15 chiffres, présentant chacun, de préférence, une hauteur de 1 à 5 cm. Ces caractères sont de préférence obtenus par une succession de points, avec une densité de 100 à 1000 points /$mm^2$.

La vitesse linéaire de déplacement « V » du faisceau incident sur la surface de la pièce céramique réfractaire, en mm/s, est de préférence supérieure à 30 mm/s, supérieure à 40 mm/s, de préférence supérieure 50 mm/s, et/ou inférieure 3 000 mm/s, de préférence inférieure à 2 000 mm/s, de préférence inférieure à 1 500 mm/s, de préférence inférieure à 1000 mm/s.

Un faisceau incident est classiquement obtenu par focalisation d'un faisceau primaire.

Plus la distance focale « D » est courte, plus la puissance surfacique est élevée.

La distance focale D est de préférence comprise entre 50 et 500 mm, de préférence entre 100 et 450 mm, de préférence entre 150 et 400 mm. Une telle distance focale est avantageusement compatible avec les diamètres équivalents décrits ci-dessus, et en particulier avec un diamètre équivalent compris entre 10 et 100 $\mu$m.

Les inventeurs ont découvert qu'il est particulièrement avantageux que le réglage du dispositif laser respecte la relation (1) suivante : $a.V^2 + b.F^2 + c.VF + d.V + e. F + f < 0$, dans laquelle :

$$a = 10^4. D + 2.10^6$$
$$b = 0,5.10^6. D - 150.10^6$$
$$c = 0,5.10^6. D - 300.10^6$$
$$d = 5.10^3. D - 2,5.10^6$$
$$e = -5.10^3. D + 2,0.10^6$$
$$f = -5.10^9. D + 1,8.10^{12}$$

V étant exprimé en mm/seconde, D étant exprimé en mm et F étant exprimé en KHz.

Dans un mode de réalisation, F/V est supérieur à D/800. La marque est alors très persistante en température, et en particulier est encore lisible après que la pièce céramique réfractaire a subi un traitement thermique à 800°C sous air pendant 24 heures.

Dans un mode de réalisation, F/V est inférieur à D/800. La phase vitreuse est alors éliminée par le faisceau laser sur une profondeur typiquement inférieure à 20% de la taille moyenne des grains de la pièce céramique réfractaire. La marque reste lisible et suffisamment contrastée mais n'affecte pas la résistance à l'abrasion de la pièce céramique réfractaire. En revanche, elle est effaçable après un traitement thermique à 800°C sous air pendant 24 heures.

De préférence, l'étanchéité du rayonnement est classiquement assurée par une cloche isolant la surface à marquer, une surpression d'air étant maintenue dans la cloche.

Le procédé de marquage augmente la rugosité de la surface de la pièce céramique réfractaire, en créant des cavités entre les grains de ZrO$_2$.La profondeur de ces cavités est cependant inférieure à la taille moyenne de ces grains. Dans le cas de matériau de type AZS par exemple la rugosité de la surface marquée est telle que le Ra mesuré selon la norme est typiquement compris entre 5 et 50 $\mu$m. La variation de z mesurée au palpeur sur un profil de 800 microns de longueur est en moyenne d'environ + 5/-20 micromètres, les creux de 10 à 100 $\mu$m se formant sur une longueur d'une centaine de micromètres environ Un tel profil de surface apparaît constituer une signature d'un procédé selon l'invention.

**Exemples**

Les exemples suivants sont fournis à des fins illustratives et ne limitent pas l'invention.

Des blocs secs, de dimensions 500 mm × 600 mm × 75 mm en un produit fondu ER1681, commercialisé par la société ZEFPRO (32% de ZrO$_2$, 51% de Al$_2$O$_3$, 15% de SiO$_2$) ont été marqués sous air, au moyen d'un laser à fibre LASER Solution F-30 classe IV de source YAG dopée Ytterbium, de longueur d'onde de 1064 nanomètres, de puissance moyenne en sortie de 30 W et dont le faisceau, de section circulaire, présente un diamètre d'environ 50 microns. Deux distances focales de 160 mm et 330 mm ont été utilisées. Le fonctionnement du laser était géré par une unité de contrôle directement reliée à la fibre laser.

La porosité totale du produit fondu ER1681 est de 2,5%.

Le produit fondu ER1681 présente une microstructure classique des produits fondus AZS, c'est-à-dire des grains de ZrO$_2$ liés par une phase liante silicatée.

Pour le marquage, chaque bloc est posé sur une face de dimensions 500 mm × 600 mm, et le faisceau laser est déplacé le long de la face opposée. Le bloc est ensuite observé.

Pour observer si une marque est effaçable, on soumet la pièce marquée à une cuisson sous air de 800°C pendant 24h et on observe si la marque a été effacée.

Le tableau 1 présente les résultats de ces observations.

Le produit fondu ER1681 présente une microstructure classique des produits fondus AZS, c'est-à-dire des grains de ZrO$_2$ liés par une phase liante silicatée.

Tableau 1

| Exemple | 1a | 1a* | 1b | 1c | 1d | 2a | 2a* | 2b | 2b* | 2c | 2d | 3 | 4 |
|---|---|---|---|---|---|---|---|---|---|---|---|---|---|
| Distance focale D, en mm | 160 | 160 | 160 | 160 | 160 | 330 | 330 | 330 | 330 | 330 | 330 | 160 | 160 |
| Fréquence de pulsation laser F, en KHz | 70 | 30 | 70 | 30 | 70 | 30 | 30 | 70 | 70 | 30 | 70 | 50 | 50 |
| Vitesse de déplacement V, en mm/sec | 50 | 50 | 300 | 300 | 1000 | 60 | 1 | 60 | 3000 | 300 | 300 | 100 | 300 |
| Puissance surfacique du faisceau P, en W/mm² | 15 000 | 15 000 | 15 000 | 15 000 | 15 000 | 15 000 | 15 000 | 15 000 | 15 000 | 15 000 | 15 000 | 15 000 | 15 000 |
| Energie d'exposition (P/V) | 300 | 300 | 50 | 50 | 15 | 250 | 15000 | 250 | 5 | 50 | 50 | 150 | 50 |
| a | 3,6E+06 | 3,6E+06 | 3,6E+06 | 3,6E+06 | 3,6E+06 | 5,3E+06 | 5,3E+06 | 5,3E+06 | 5,3E+06 | 5,3E+06 | 5,3E+06 | 3,6E+06 | 3,6E+06 |
| b | -7,0E+07 | -7,0E+07 | -7,0E+07 | -7,0E+07 | -7,0E+07 | 1,5E+07 | 1,5E+07 | 1,5E+07 | 1,5E+07 | 1,5E+07 | 1,5E+07 | -7,0E+07 | -7,0E+07 |
| c | -2,2E+08 | -2,2E+08 | -2,2E+08 | -2,2E+08 | -2,2E+08 | -1,4E+08 | -1,4E+08 | -1,4E+08 | -1,4E+08 | -1,4E+08 | -1,4E+08 | -2,2E+08 | -2,2E+08 |
| d | -1,7E+06 | -1,7E+06 | -1,7E+06 | -1,7E+06 | -1,7E+06 | -8,5E+05 | -8,5E+05 | -8,5E+05 | -8,5E+05 | -8,5E+05 | -8,5E+05 | -1,7E+06 | -1,7E+06 |
| e | 1,2E+06 | 1,2E+06 | 1,2E+06 | 1,2E+06 | 1,2E+06 | 3,5E+05 | 3,5E+05 | 3,5E+05 | 3,5E+05 | 3,5E+05 | 3,5E+05 | 1,2E+06 | 1,2E+06 |
| f | 1,0E+12 | 1,0E+12 | 1,0E+12 | 1,0E+12 | 1,0E+12 | 1,5E+11 | 1,5E+11 | 1,5E+11 | 1,5E+11 | 1,5E+11 | 1,5E+11 | 1,0E+12 | 1,0E+12 |
| (1) a.V²+b.F²+c.VF+d.V+e.F+f= | -1,0E+11 | 6,2E+11 | -3,6E+12 | -7,2E+11 | -1,1E+13 | -6,0E+10 | 1,6E+11 | -3,2E+11 | 2,0E+13 | -5,7E+11 | -2,1E+12 | -2,4E+11 | -2,2E+12 |
| Relation respectée si (1) < 0 | oui | non | oui | oui | oui | oui | non | oui | non | oui | oui | oui | oui |
| 800*F / (V*D) = | 7,0 | | 1,2 | 0,5 | 0,4 | 1,2 | 72,7 | 2,8 | 0,1 | 0,2 | 0,6 | 2,5 | 0,8 |
| Rugosité moyenne (µm) R | 50 | 90 | 30 | 20 | 10 | 50 | 90 | 30 | 1 | 10 | 8 | | |
| Rugosité moyenne (µm) R max | | | | | | | | | | 75 | | | |
| Lisibilité de la marque | Elevée | Faible | Elevée | Elevée | Elevée | Elevée | Faible | Elevée | Faible | Elevée | Elevée | Elevée | Elevée |
| Marque effaçable? | non | non | non | oui | oui | non | non | non | non | oui | oui | non | oui |
| Destruction superficielle du matériau | non | oui | non | non | non | non | oui | non | non | non | non | non | non |

\* : hors invention

Les exemples selon l'invention montrent que si les variables F et V sont choisies de manière à ce que la relation (1) soit respectée, la marque présente une couleur homogène, sans dégradé, et un contraste assurant une très bonne lisibilité.

L'exemple comparatif 1a*, réalisé avec une fréquence de pulsation plus faible que celle de l'exemple 1a selon l'invention, présente un marquage contrasté, non effaçable mais peu lisible. La rugosité moyenne de la surface marquée est plus élevée.

La vitesse de déplacement des exemples 2a* et 2b* comparatifs a été modifiée significativement par rapport aux exemples 2a et 2b selon l'invention, respectivement. La lisibilité de la marque en est considérablement dégradée.

La comparaison des exemples 1c et 1b montre que la réduction de la fréquence de pulsation F permet de rendre la marque effaçable après traitement thermique à 800°C pendant 24h.

Les exemples 3 et 4 selon l'invention montrent qu'à fréquence constante la marque peut devenir effaçable (pour un produit selon l'invention) par un changement de la vitesse de déplacement du faisceau laser le long de la surface du bloc réfractaire à marquer.

Le bon comportement au bullage des pièces marquées selon l'invention a été constaté dans un test classique de bullage avec du verre sodocalcique à 1100°C durant 30 heures. Les pièces marquées suivant un procédé de marquage selon l'invention sont donc adaptées à une utilisation dans un revêtement d'un four de fusion de verre.

Comme cela apparaît clairement à présent, l'invention fournit un procédé de marquage simple à mettre en œuvre, qui ne modifie pas les propriétés de la pièce céramique réfractaire, et permet d'obtenir une marque bien adaptée aux pièces céramiques réfractaires de fours métallurgiques ou verriers.

Bien entendu, l'invention n'est pas limitée aux modes de réalisation décrits, fournis à titre illustratif et non limitatif.

**Revendications**

1. Procédé de marquage d'une surface d'une pièce céramique réfractaire, dite « surface à marquer », ladite pièce présentant

   - une microstructure comprenant des grains comportant chacun plus de 50% en masse de $ZrO_2$, liés par une phase liante silicatée,
   - une porosité totale inférieure à 5% en volume,

   ledit procédé comportant une irradiation de ladite surface par un faisceau laser, le faisceau étant émis par un dispositif laser réglé pour respecter la relation (1) suivante :

   $$a.V^2 + b.F^2 + c.VF + d.V + e.F + f < 0,$$

   dans laquelle :

   $a = 10^4 . D + 2.10^6$
   $b = 0,5.10^6 . D - 150.10^6$
   $c = 0,5.10^6 . D - 300.10^6$
   $d = 5.10^3 . D - 2,5.10^6$
   $e = -5.10^3 . D + 2,0.10^6$
   $f = -5.10^9 . D + 1,8.10^{12}$

   la vitesse linéaire de déplacement « V » du faisceau incident sur la surface de la pièce céramique réfractaire étant exprimée en mm/seconde, la distance focale « D » étant exprimée en mm et la fréquence des pulsations du laser « F » étant exprimée en KHz.

2. Procédé selon la revendication précédente, dans lequel la fréquence F est inférieure à 300 KHz et/ou la vitesse V est inférieure à 5000 mm/sec.

3. Procédé selon la revendication immédiatement précédente, dans lequel la fréquence F est inférieure à 100 KHz et/ou la vitesse V est inférieure à 3000 mm/sec.

4. Procédé selon l'une quelconque des revendications précédentes, dans lequel, pour rendre la marque effaçable, F/V < D/800.

**5.** Procédé selon l'une quelconque des revendications précédentes, dans lequel l'énergie d'exposition est adaptée pour éliminer la phase liante sur une profondeur comprise entre 5 et 100 $\mu$m et/ou pour éliminer la phase liante sur une profondeur supérieure à 10% et inférieure à 50% de la taille moyenne des grains de la surface à marquer.

**6.** Procédé selon l'une quelconque des revendications précédentes, dans lequel avant irradiation, la surface à marquer présente une rugosité Ra, mesurée selon la norme ISO4287/1997, inférieure à 20 $\mu$m et/ou la pièce céramique réfractaire présente un pourcentage d'humidité inférieur ou égal à 1%.

**7.** Procédé selon l'une quelconque des revendications précédentes, dans lequel les grains comportent plus de 95% de $ZrO_2$, en pourcentage massique sur la base des oxydes.

**8.** Procédé selon l'une quelconque des revendications précédentes, dans lequel la pièce céramique réfractaire est en un matériau fondu.

**9.** Procédé selon l'une quelconque des revendications précédentes, dans lequel la pièce céramique réfractaire est en un matériau constitué, pour plus de 90% de sa masse, d'un ou plusieurs oxydes choisis dans le groupe constitué par $ZrO_2$, $Al_2O_3$, $SiO_2$, $Cr_2O_3$, $Y_2O_3$, et $CeO_2$.

**10.** Procédé selon l'une quelconque des revendications précédentes, dans lequel le diamètre équivalent de la section du faisceau lorsqu'il rencontre la surface à marquer est supérieur à 30 $\mu$m et inférieur à 100 $\mu$m.

**11.** Pièce céramique réfractaire présentant

- une microstructure constituée de grains comportant plus de 50% en masse de $ZrO_2$, liés par une phase liante silicatée,
- une porosité totale inférieure à 5% en volume, ladite pièce céramique réfractaire comportant une marque, de préférence inscrite au moyen d'un procédé de marquage selon l'une quelconque des revendications précédentes, la marque définissant une cavité
- d'une profondeur comprise entre 5 $\mu$m et 100 $\mu$m, et/ou
- du fond de laquelle les grains font saillie, en moyenne, de plus de 5% et de moins de 50% de leur taille moyenne.

**12.** Pièce céramique réfractaire selon la revendication immédiatement précédente, dans laquelle la marque comporte une pluralité de points, la densité de points étant comprise entre 100 et 1000 points par mm$^2$.

**13.** Pièce céramique réfractaire selon l'une quelconque des deux revendications immédiatement précédentes, dans laquelle la marque est un caractère alphanumérique, une ligne ou une matrice de points ou une représentation graphique.

**14.** Procédé de fabrication d'un four, en particulier d'un four de verrerie ou d'un four métallurgique, ledit procédé comportant les étapes suivantes :

1) fabrication d'une pluralité de pièces céramiques réfractaires et inscription d'une marque sur chaque pièce conformément à un procédé de marquage selon l'une quelconque des revendications 1 à 9, la marque inscrite sur une pièce étant fonction d'un emplacement prévu pour ladite pièce dans le four ;
2) assemblage des pièces céramiques réfractaires, de manière que chaque pièce soit à un emplacement conforme à la marque qui y est inscrite.

**Patentansprüche**

**1.** Verfahren zum Markieren einer Fläche eines hitzebeständigen Keramikbauteils, die aus "zu markierende Fläche" bezeichnet wird, wobei das Bauteil Folgendes aufweist

- eine Mikrostruktur, die Körner umfasst, welche jeweils mehr als 50 Massen-% an $ZrO_2$ enthalten, wobei sie durch eine silikatartige Bindemittelphase gebunden sind,
- eine Gesamtporosität von weniger als 5 Volumen-%,

wobei das Verfahren eine Bestrahlung der Fläche mit einem Laserstrahl aufweist, wobei der Strahl von einer Laservorrichtung ausgesendet wird, die derart eingestellt ist, dass sie folgende Beziehung (1) gilt:

$$a.V^2 + b.F^2 + c.VF + d.V + e.F + f < 0,$$

wobei:

$a = 10^4. D + 2.10^6$
$b = 0,5.10^6. D - 150.10^6$
$c = 0,5.10^6. D - 300.10^6$
$d = 5.10^3. D - 2,5.10^6$
$e = -5.10^3. D + 2,0.10^6$
$f = -5.10^9. D + 1,8.10^{12}$

wobei die Geschwindigkeit der linearen Bewegung "V" des Strahls, welcher auf die Fläche des hitzebeständigen Keramikbauteils trifft, in mm/Sekunde ausgedrückt wird, die Brennweite "D" in mm ausgedrückt wird und die Pulsfrequenz des Lasers "F" in kHz ausgedrückt wird.

2. Verfahren nach dem vorhergehenden Anspruch, wobei die Frequenz F geringer als 300 kHz ist und/oder die Geschwindigkeit V geringer als 5.000 mm/sek. ist.

3. Verfahren nach dem unmittelbar vorhergehenden Anspruch, wobei die Frequenz F geringer als 100 kHz ist und/oder die Geschwindigkeit V geringer als 3.000 mm/sek. ist.

4. Verfahren nach einem beliebigen der vorhergehenden Ansprüche, wobei F/V < D/800 ist, damit die Markierung gelöscht werden kann.

5. Verfahren nach einem beliebigen der vorhergehenden Ansprüche, wobei die Einwirkungsenergie dafür geeignet ist, die Bindemittelphase über eine Tiefe im Bereich von 5 bis 100 $\mu$m zu entfernen und/oder die Bindemittelphase über eine Tiefe zu entfernen, welche mehr als 10 % und weniger als 50 % der mittleren Korngröße der zu markierenden Fläche ausmacht.

6. Verfahren nach einem beliebigen der vorhergehenden Ansprüche, wobei die zu markierende Fläche vor der Bestrahlung eine Rauigkeit Ra, gemessen nach der Norm ISO 4287/1997, von weniger als 20 $\mu$m aufweist und/oder das hitzebeständige Keramikbauteil einen prozentualen Feuchtigkeitswert von höchstens 1 % aufweist.

7. Verfahren nach einem beliebigen der vorhergehenden Ansprüche, wobei die Körner mehr als 95 % an $ZrO_2$ aufweisen, in Massenprozent unter Bezugnahme auf die Oxide.

8. Verfahren nach einem beliebigen der vorhergehenden Ansprüche, wobei das hitzebeständige Keramikbauteil aus einem geschmolzenen Material ist.

9. Verfahren nach einem beliebigen der vorhergehenden Ansprüche, wobei das hitzebeständige Keramikbauteil aus einem Material ist, welches zu mehr als 90 % seiner Masse und einem oder mehreren Oxiden besteht, die aus der Gruppe ausgewählt sind, welche aus $ZrO_2$, $Al_2O_3$, $SiO_2$, $Cr_2O_3$, $Y_2O_3$ und $CeO_2$ besteht.

10. Verfahren nach einem beliebigen der vorhergehenden Ansprüche, wobei der Äquivalentdurchmesser des Strahlquerschnitts beim Auftreffen desselben auf die zu markierende Fläche mehr als 30 $\mu$m und weniger als 100 $\mu$m beträgt.

11. Hitzebeständiges Keramikbauteil, das Folgendes aufweist

- eine Mikrostruktur, die aus Körnern besteht, welche mehr als 50 Massen-% an $ZrO_2$ enthalten, wobei sie durch eine silikatartige Bindemittelphase gebunden sind,
- eine Gesamtporosität von weniger als 5 Volumen%,

wobei das hitzebeständige Keramikbauteil eine Markierung aufweist, mit welcher es vorzugsweise mittels eines Markierungsverfahrens gemäß einem beliebigen der vorhergehenden Ansprüche versehen wurde, wobei die Markierung einen Hohlraum festlegt,

- dessen Tiefe im Bereich von 5 $\mu$m bis 100 $\mu$m liegt, und/oder
- aus deren Boden die Körner um mehr als 5 % und weniger als 50 % ihrer mittleren Größe herausragen.

12. Hitzebeständiges Keramikbauteil nach dem unmittelbar vorhergehenden Anspruch, wobei die Markierung eine Mehrzahl von Punkten aufweist, wobei die Dichte der Punkte im Bereich von 100 bis 1.000 Punkten pro mm$^2$ liegt.

13. Hitzebeständiges Keramikbauteil gemäß einem beliebigen der beiden unmittelbar vorhergehenden Ansprüche, wobei es sich bei der Markierung um ein alphanumerisches Zeichen, eine Linie oder eine Punktematrix oder eine grafische Darstellung handelt.

14. Verfahren zur Herstellung eines Ofens, insbesondere eines Glasschmelzofens oder eines metallurgischen Ofens, wobei das Verfahren die folgenden Schritte aufweist:

1) Herstellen einer Mehrzahl von hitzebeständigen Keramikbauteilen und Versehen jedes der Bauteile mit einer Markierung gemäß einem Markierungsverfahren nach einem beliebigen der Ansprüche 1 bis 9, wobei die Markierung, mit welcher ein Bauteil versehen ist, von der vorgesehenen Anordnung dieses Bauteils in dem Ofen abhängt;
2) Zusammenfügen der hitzebeständigen Keramikbauteile, derart, dass jedes Bauteil entsprechend der Markierung angeordnet ist, mit welcher es versehen ist.

**Claims**

1. Process for marking a surface of a refractory ceramic part, known as the "surface to be marked", said part having

- a microstructure comprising grains each including more than 50% by mass of ZrO$_2$, bound by a silicate binder phase,
- a total porosity of less than 5% by volume,

said process involving irradiation of said surface with a laser beam, the beam being emitted by a laser device set to comply with relationship (1) below:

$$a.V^2 + b.F^2 + c.VF + d.V + e.F + f < 0,$$

in which:

$a = 10^4. D + 2\times10^6$
$b = 0.5\times10^6. D - 150\times10^6$
$c = 0.5\times10^6. D - 300\times10^6$
$d = 5\times10^3. D - 2.5\times10^6$
$e = -5\times10^3. D + 2.0\times10^6$
$f = -5\times10^9. D + 1.8\times10^{12}$

the linear displacement speed "V" of the incident beam on the surface of the refractory ceramic part being expressed in mm/second, the focal distance "D" being expressed in mm and the pulse frequency "F" of the laser being expressed in kHz.

2. Process according to the preceding claim, in which the frequency F is less than 300 kHz and/or the speed V is less than 5000 mm/sec.

3. Process according to the immediately preceding claim, in which the frequency F is less than 100 kHz and/or the speed V is less than 3000 mm/sec.

4. Process according to any one of the preceding claims, in which, to make the mark erasable, F/V < D/800.

5. Process according to any one of the preceding claims, in which the exposure energy is adapted to remove the binder phase over a depth of between 5 and 100 $\mu$m and/or to remove the binder phase over a depth of greater than 10% and less than 50% of the mean size of the grains of the surface to be marked.

6. Process according to any one of the preceding claims, in which, before irradiation, the surface to be marked has a roughness Ra, measured according to the standard ISO 4287/1997, of less than 20 $\mu$m and/or the refractory ceramic part has a percentage of moisture of less than or equal to 1%.

7. Process according to any one of the preceding claims, in which the grains include more than 95% of $ZrO_2$, as a mass percentage on the basis of the oxides.

8. Process according to any one of the preceding claims, in which the refractory ceramic part is made of a fused material.

9. Process according to any one of the preceding claims, in which the refractory ceramic part is made of a material consisting, for more than 90% of its mass, of one or more oxides chosen from the group consisting of $ZrO_2$, $Al_2O_3$, $SiO_2$, $Cr_2O_3$, $Y_2O_3$ and $CeO_2$.

10. Process according to any one of the preceding claims, in which the equivalent diameter of the cross section of the beam when it meets the surface to be marked is greater than 30 $\mu$m and less than 100 $\mu$m.

11. Refractory ceramic part having

- a microstructure consisting of grains including more than 50% by mass of $ZrO_2$, bound by a silicate binder phase,
- a total porosity of less than 5% by volume,

said refractory ceramic part including a mark, preferably inscribed by means of a marking process according to any one of the preceding claims, the mark defining a cavity

- with a depth of between 5 $\mu$m and 100 $\mu$m, and/or
- from the bottom of which the grains project, on average, by more than 5% and less than 50% of their mean size.

12. Refractory ceramic part according to the immediately preceding claim, in which the mark includes a plurality of dots, the dot density being between 100 and 1000 dots per $mm^2$.

13. Refractory ceramic part according to either of the two immediately preceding claims, in which the mark is an alphanumeric character, a line or a dot matrix or a graphic representation.

14. Process for manufacturing a furnace, in particular a glass furnace or a metallurgical furnace, said process including the following steps:

1) manufacturing a plurality of refractory ceramic parts and inscription of a mark on each part in accordance with a marking process according to any one of Claims 1 to 9, the mark inscribed on a part being dependent on an intended position for said part in the furnace;
2) assembling the refractory ceramic parts so that each part is in a position in accordance with the mark inscribed thereon.

15

Fig. 1

Fig. 2

Fig. 3

## RÉFÉRENCES CITÉES DANS LA DESCRIPTION

**Documents brevets cités dans la description**

- US 5272120 A
- US 5543269 A
- JP 20054175624 B

- US 4769310 A
- US 5030551 A
- US 6238847 B